# EUROPÄISCHE PATENTANMELDUNG

(11) **EP 4 434 825 A1**
(43) Veröffentlichungstag der Anmeldung: **25.09.2024**
(21) Anmeldenummer: 24164984.7
(22) Anmeldetag: 20.03.2024
(51) Int. Cl.: B60S 3/04, B60S 3/06

(54) **FAHRZEUGWASCHANLAGE MIT EINER SICHERUNGSVORRICHTUNG UND VERFAHREN ZUM BETREIBEN EINER FAHRZEUGWASCHANLAGE**

(30) Priorität: 24.03.2023 DE 102023107503
(71) Anmelder: Alfred Kärcher SE & Co. KG, 71364 Winnenden (DE)
(72) Erfinder: Schlichenmaier, Steffen, 71364 Winnenden (DE); Speckmaier, André, 71364 Winnenden (DE)
(74) Vertreter: DTS Patent- und Rechtsanwälte PartmbB

(57) **Zusammenfassung**

Die vorliegende Erfindung betrifft eine Fahrzeugwaschanlage (100) und ein Verfahren, mit einem Waschportal (102) mit zwei im Abstand zueinander angeordneten in Höhenrichtung (196) erstreckten Trägern (116) und einem diese miteinander verbindenden Querträger (118). Im Betrieb der Fahrzeugwaschanlage (100) ist ein Waschplatz (120) auf einer Aufstellfläche (104) definiert. Das Portal (102) definiert zufahrtseitig eine Vorderseite (128) und weist eine der Vorderseite (128) abgewandte rückwärtige Seite (130) auf, eine Antriebseinrichtung (124) zum Verfahren des Waschportals (102) relativ zu einem Fahrzeug (106) in einer Vorwärtsrichtung (154) und einer Rückwärtsrichtung (158), eine an der rückwärtigen Seite (130) angeordnete Sicherungsvorrichtung (160, 210, 230) zum kontaktbehafteten Erfassen eines Hindernisses, die ein Prallteil (164) aufweist, das durch Kontakt mit dem Hindernis aus einer Nichtbetätigungsstellung in mindestens eine Betätigungsstellung auslenkbar ist, und ein Halteteil (162) zum Festlegen am Waschportal (102), mindestens eine Sensoreinrichtung (178), die mit der Pralleinrichtung in Wirkverbindung steht und über die die Einnahme der Nichtbetätigungsstellung und/oder einer Betätigungsstellung durch die Pralleinrichtung erfassbar ist. Abhängig von einem Erfassungssignal der Sensoreinrichtung (178) ist die Antriebseinrichtung (124) und/oder ein Reinigungsaggregat (136) der Fahrzeugwaschanlage (100) deaktivierbar. Das Hindernis ist während der Bewegung des Waschportals (102) in der Rückwärtsrichtung (158) erfassbar und ein diesbezügliches Erfassungssignal bereitstellbar.

## Beschreibung

Die vorliegende Erfindung betrifft eine Fahrzeugwaschanlage, umfassend ein Waschportal mit zwei im Abstand zueinander angeordneten in Höhenrichtung erstreckten Trägern und mindestens einem diese miteinander verbindenden Querträger, wobei im Betrieb der Fahrzeugwaschanlage ein Waschplatz auf einer Aufstellfläche definiert ist, wobei das Waschportal zufahrtseitig eine Vorderseite definiert und eine der Vorderseite abgewandte rückwärtige Seite aufweist, eine Antriebseinrichtung zum Verfahren des Waschportals relativ zu einem am Waschplatz positionierten Fahrzeug in einer Vorwärtsrichtung und einer Rückwärtsrichtung, eine an der rückwärtigen Seite angeordnete Sicherungsvorrichtung zum kontaktbehafteten Erfassen eines Hindernisses, insbesondere einer Fahrzeugkomponente des Fahrzeugs, welche Sicherungsvorrichtung ein Prallteil aufweist, das durch Kontakt mit dem Hindernis aus einer Nichtbetätigungsstellung in mindestens eine Betätigungsstellung auslenkbar ist, und ein Halteteil zum Festlegen am Waschportal, und mindestens eine Sensoreinrichtung, die mit der Pralleinrichtung in Wirkverbindung steht und über die die Einnahme der Nichtbetätigungsstellung und/oder einer Betätigungsstellung durch die Pralleinrichtung erfassbar ist.

Außerdem betrifft die Erfindung ein Verfahren zum Betreiben einer Fahrzeugwaschanlage, insbesondere eine Fahrzeugwaschanlage der vorstehend beschriebenen Art.

Bei Fahrzeugwaschanlagen mit Waschportal (Portalwaschanlagen) ist es bekannt, Sicherungsvorrichtungen einzusetzen, um die korrekte Positionierung des Fahrzeugs vor dem Waschprogramm sicherzustellen und/oder um Hindernisse im Gefahrenbereich des Waschportals zu erfassen. Zu diesen Hindernissen zählen zum Beispiel Personen, die sich, in der Regel unbefugt, im Bereich des Waschportals aufhalten.

In der JP 2010-155538 A ist an einer Vorderseite des Waschportals beidseitig jeweils eine Sicherungsvorrichtung angeordnet, die innenseitig, d. h. dem Waschplatz zugewandt, und außenseitig, d. h. dem Waschplatz abgewandt, vertikale Träger zum kontaktbehafteten Erfassen von Hindernissen umfasst. Über die innenseitig angeordneten Träger kann beim Verfahren des Waschportals in der Vorwärtsrichtung ein Kontakt mit dem Fahrzeug erfasst werden, insbesondere mit den Außenspiegeln. Abhängig hiervon kann zum Beispiel die Fahrzeugwaschanlage außer Betrieb gesetzt werden. Die außenseitig angeordneten Träger dienen der Erfassung beispielsweise einer Person, die vor oder seitlich neben dem Waschportal steht und zum Beispiel zwischen dem Waschportal und einer Wand der Waschhalle eingeklemmt werden könnte. Die JP 2010-155538 A zeigt ferner Sicherungsvorrichtungen, die an der rückwärtigen Seite am Waschportal angeordnet sind und innenseitig sowie außenseitig jeweils einen Träger aufweisen.

In der JP 2007-062545 A sind an der Vorderseite Sicherungsvorrichtungen mit innenseitigen Trägern beschrieben, die bei fehlerhafter Positionierung des Fahrzeugs und/oder einer Überbreite kontaktiert werden können, um die Fahrzeugwaschanlage außer Betrieb zu setzen. Eine fehlerhafte Positionierung liegt zum Beispiel dann vor, wenn eine Fahrzeugmittenebene einen seitlichen Versatz in der Querrichtung relativ zu einer Mittellängsebene der Fahrzeugwaschanlage aufweist. Alternativ kann zum Beispiel eine Schiefstellung als fehlerhafte Positionierung angesehen werden, wobei die Fahrzeugmittenebene einen spitzen Winkel relativ zur Mittellängsebene aufweist.

Die Positionierung und/oder eine Überbreite des Fahrzeugs für das Waschportal können vor dem Waschvorgang kontrolliert und überprüft werden. Dies ist zum Beispiel in der JP 2007-095954 A beschrieben, die eine Fahrzeugwaschanlage beschreibt, bei der horizontal ausgerichtete Träger für eine kontaktbehaftete Erfassung des Fahrzeugs von der Seite in den Waschplatz ragen und bei Kontakt verformt werden können.

In der JP H 08-40218 A sind Sicherungsvorrichtungen eines Waschportals offenbart. Die Sicherungsvorrichtungen umfassen jeweils einen Stoßkörper an der Vorderseite oder an der Rückseite der in Höhenrichtung erstreckten Träger (auch als Portalsäulen bezeichnet).

Sicherungsvorrichtungen an der Vorderseite und an der rückwärtigen Seite eines Waschportals sind auch in der KR 10-079191 A beschrieben. Dabei kommt jeweils ein Seilzug zum Einsatz, der frontal vor oder hinter dem in Höhenrichtung erstreckten Träger positioniert ist und bei Kontakt mit einem Hindernis über einen Hebel mit einer Sensoreinrichtung zusammenwirken kann.

Es wird vorliegend davon ausgegangen, dass die Fahrzeugwaschanlage bestimmungsgemäß eingesetzt wird. Hierbei ist die Fahrzeugwaschanlage auf der Aufstellfläche positioniert und relativ zu dieser verfahrbar. "Vorderseite" bezieht sich auf eine der Zufahrt zugewandte Seite, von der das Fahrzeug an das Waschportal herangefahren und vor Beginn eines Waschprogrammes davor abgestellt wird. Das Waschportal kann sich während eines Waschprogrammes üblicherweise zunächst in der Vorwärtsrichtung bewegen, auf das Fahrzeug zu und über dieses hinweg. Umgekehrt kann das Waschportal in der Rückwärtsrichtung bewegt werden, über das Fahrzeug hinweg und von diesem weg.

Aufgabe der vorliegenden Erfindung ist es, eine Fahrzeugwaschanlage und ein Verfahren zum Betreiben einer Fahrzeugwaschanlage bereitzustellen, mit der beziehungsweise mit dem eine höhere Betriebssicherheit erzielt werden kann.

Diese Aufgabe wird bei einer gattungsgemäßen Fahrzeugwaschanlage erfindungsgemäß dadurch gelöst, dass abhängig von einem Erfassungssignal der Sensoreinrichtung die Antriebseinrichtung und/oder ein Reinigungsaggregat der Fahrzeugwaschanlage deaktivierbar ist, wobei das Hindernis während der Bewegung des Waschportals in der Rückwärtsrichtung erfassbar und ein diesbezügliches Erfassungssignal bereitstellbar ist, insbesondere während eines Waschprogrammes.

Bei der erfindungsgemäßen Fahrzeugwaschanlage besteht die Möglichkeit, über die mindestens eine Sicherungsvorrichtung an der rückwärtigen Seite während einer Rückwärtsbewegung des Waschportals in der Rückwärtsrichtung ein Hindernis zu erfassen. Dadurch wird die Betriebssicherheit der Fahrzeugwaschanlage erhöht.

In die vorliegende Erfindung fließt die Überlegung mit ein, dass es in der Praxis zwar möglich ist, die korrekte Positionierung und/oder eine Breite des Fahrzeugs mittels einer an der Vorderseite des Waschportals angeordneten Sicherungsvorrichtung vor Beginn des Waschprogrammes und/oder während der Bewegung des Waschportals in der Vorwärtsrichtung zu erfassen. Ändert sich jedoch beispielsweise die Positionierung des Fahrzeugs und/oder dessen Breite während des Waschportals, insbesondere vor und während der Rückwärtsbewegung, ist dies mittels der an der Vorderseite angeordneten Sicherungsvorrichtung nicht möglich. Zu diesem Zweck ist erfindungsgemäß die mindestens eine Sicherungsvorrichtung an der rückwärtigen Seite vorhanden, wobei deren Prallteil eine Überwachung während der Rückwärtsbewegung ermöglicht, so dass bei Kontakt mit dem Hindernis, insbesondere einer Fahrzeugkomponente, ein entsprechendes Erfassungssignal bereitgestellt und hierauf basierend die Antriebseinrichtung für das Waschportal und/oder mindestens ein Reinigungsaggregat deaktiviert werden kann/können.

Üblicherweise hat der Fahrzeugführer das Fahrzeug während der Fahrzeugwäsche zu verlassen. Bei unsachgemäßer Benutzung kann jedoch der Fall auftreten, dass der Fahrzeugführer während des Waschprogrammes im Fahrzeug verbleibt und aussteigt, unter Öffnen einer Türe und damit verbundener Verbreiterung des Fahrzeugs. Denkbar ist auch, dass der Fahrzeugführer während des Waschprogrammes eine Fahrzeugtüre unter Verbreiterung des Fahrzeugs öffnet, um einzusteigen oder einen Gegenstand aus dem Fahrzeug zu holen.

Durch die erfindungsgemäße Ausgestaltung kann insbesondere eine Verbreiterung des Fahrzeugs durch Öffnen der Tür erfasst werden, wenn sich das Waschportal in der Rückwärtsrichtung bewegt. Eine derartige Überwachung ist mit aus dem Stand der Technik bekannten Sicherungsvorrichtungen an der Vorderseite des Waschportals nicht möglich.

Es kann zur Steigerung der Betriebssicherheit vorgesehen sein, dass nach einer Deaktivierung der Antriebseinrichtung für das Waschportal und/oder mindestens eines Reinigungsaggregates während eines Waschprogrammes eine erneute Inbetriebnahme der Fahrzeugwaschanlage erst durch einen Benutzer möglich ist, beispielsweise über eine Bedieneinheit der Fahrzeugwaschanlage. Der Benutzung kann so die Ursache für die Deaktivierung beheben und sicherstellen, dass für den weiteren Betrieb keine Gefahr besteht.

Die erneute Inbetriebnahme kann insbesondere erfordern, dass das Prallteil wieder in die Nichtbetätigungsstellung überführt wird, zum Beispiel über eine Rückstelleinrichtung oder manuell durch den Benutzer.

Vorgesehen sein kann, dass die Fahrzeugwaschanlage den Betrieb erneut ohne Zutun des Benutzers aufnimmt, wenn das Prallteil wieder in die Nichtbetätigungsstellung überführt wurde, insbesondere durch eine Rückstelleinrichtung.

Von Vorteil ist es, wenn das Hindernis während der Bewegung des Waschportals in der Vorwärtsrichtung erfassbar und ein diesbezügliches Erfassungssignal bereitstellbar ist, insbesondere während eines Waschprogrammes. Dies bietet zum Beispiel die Möglichkeit, das Hindernis, speziell eine geöffnete Fahrzeugtür, dann zu erfassen, wenn es mit einer an der Vorderseite angeordneten Sicherungsvorrichtung infolge der Bewegung des Waschportals nicht mehr erfasst werden kann. In diesem Fall kann jedoch das Hindernis über das Prallteil der Sicherungsvorrichtung an der rückwärtigen Seite erfasst werden.

Günstig ist es, wenn die Fahrzeugwaschanlage zwei Sicherungsvorrichtungen umfasst, die an einander gegenüberliegenden Seiten des Waschplatzes jeweils am Waschportal festgelegt sind, wobei die Sicherungsvorrichtungen vorzugsweise spiegelbildlich bezüglich einer Mittellängsebene der Fahrzeugwaschanlage ausgestaltet sind. Dies erhöht die Betriebssicherheit der Fahrzeugwaschanlage. Insbesondere können zu beiden Seiten am Fahrzeug angeordnete Hindernisse erfasst werden, zum Beispiel eine geöffnete Tür auf der linken Seite oder auf der rechten Seite des Fahrzeugs.

Als vorteilhaft kann es sich erweisen, wenn das Waschportal an einem der in Höhenrichtung erstreckten Träger einen Fahrfuß umfasst oder bildet und über diesen auf der Aufstellfläche verfahrbar ist, wobei die mindestens eine Sicherungsvorrichtung am Fahrfuß festgelegt ist. Durch die Festlegung am Fahrfuß ist die Sicherungsvorrichtung vorteilhafterweise außerhalb eines Wirkbereiches eines Reinigungsaggregates angeordnet.

Beispielsweise ist das Halteteil an einer dem Waschplatz abgewandten Außenseite des Waschportals gehalten, insbesondere am Fahrfuß.

Vorgesehen sein kann, dass der Fahrfuß an der dem Waschplatz abgewandten Seite relativ zu einer Außenkontur des in Höhenrichtung erstreckten Trägers in Richtung des Waschplatzes einen Versatz aufweist und dass das Halteteil an der dem Waschplatz abgewandten Außenseite des Fahrfußes im Bereich des Versatzes angeordnet ist. Auf diese Weise kann eine kompakte Anordnung der Sicherungsvorrichtung erzielt werden, die vorzugsweise nicht über die Außenkontur hinausragt. Dies erweist sich zum Beispiel auch als vorteilhaft im Fall einer möglichen Nachrüstung einer bestehenden Fahrzeugwaschanlage mit der Sicherungsvorrichtung.

Günstig kann es sein, wenn das Prallteil und/oder das Halteteil zumindest abschnittsweise unterhalb eines Reinigungsaggregates angeordnet ist und/oder zumindest abschnittsweise unterhalb eines Reinigungsaggregates verläuft. Dadurch kann/können das Prallteil und/oder das Halteteil außerhalb eines Wirkungsbereichs des Reinigungsaggregates angeordnet sein, um den Waschvorgang nicht zu beeinträchtigen.

Alternativ oder ergänzend kann es günstig sein, wenn das Prallteil zumindest abschnittsweise seitlich neben einem Reinigungsaggregat angeordnet ist und/oder verläuft, insbesondere hinter dem Reinigungsaggregat, bezogen auf eine Längsrichtung der Fahrzeugwaschanlage. Auf diese Weise kann eine Kollision des Reinigungsaggregates mit dem Prallteil vermieden werden.

Das Reinigungsaggregat ist zum Beispiel eine Seitenwaschbürste der Fahrzeugwaschanlage, wobei das Prallteil außerhalb des Wirkbereiches der Seitenwaschbürste in deren angetriebenem Zustand ist, wodurch eine Kollision mit der Seitenwaschbürste vermieden werden kann, selbst wenn diese angetrieben ist. Dies gilt insbesondere und vorteilhafterweise dann, wenn die Seitenwaschbürste eine Endstellung einnimmt, bezogen auf die Querrichtung der Fahrzeugwaschanlage, und dementsprechend in der Querrichtung so weit wie möglich nach außen verfahren ist.

Vorgesehen sein kann beispielsweise, dass das Prallteil einen Tragabschnitt umfasst und über diesen am Halteteil gehalten ist. Der Tragabschnitt ist zum Beispiel unterhalb des Reinigungsaggregates angeordnet. Vorteilhafterweise ist der Tragabschnitt parallel zur Aufstellfläche ausgerichtet, insbesondere horizontal.

Vorgesehen sein kann, dass das Prallteil einen Kontaktabschnitt zum Kontaktieren des Hindernisses umfasst. Der Kontaktabschnitt ist vorzugsweise seitlich neben einem Reinigungsaggregat angeordnet und/oder verläuft seitlich neben diesem. Beispielsweise ist der Kontaktabschnitt in einer Höhenrichtung ausgerichtet, insbesondere vertikal.

Vorgesehen sein kann, dass das Prallteil zwei Kontaktabschnitte zum Kontaktieren umfasst, die im Abstand zueinander angeordnet sind, wobei der eine Kontaktabschnitt an der dem Waschplatz zugewandten Seite angeordnet ist und der andere Kontaktabschnitt insbesondere seitlich neben dem Waschportal an dessen dem Waschplatz abgewandten Seite. Dies gibt die Möglichkeit, das Prallteil mit einem größeren Erfassungsbereich zu versehen. Auf diese Weise kann zum Beispiel ein innenseitig angeordnetes Hindernis erfasst werden, etwa eine geöffnete Fahrzeugtür, sowie ein außenseitig angeordnetes Hindernis, beispielsweise eine Person.

Zur Erzielung desselben Vorteils kann es günstig sein, wenn das Prallteil in Ansicht längs der Vorwärts- oder der Rückwärtsrichtung einen Rahmen umfasst oder ausbildet, zumindest mit einem Kontaktabschnitt an der dem Waschplatz zugewandten Seite und einem weiteren Kontaktabschnitt im Abstand dazu sowie einem dritten Kontaktabschnitt, der die vorstehenden Kontaktabschnitte miteinander verbindet und der vom Waschplatz weg in Richtung einer Außenseite des Waschportals verläuft.

Zur Erzielung einer konstruktiv einfachen Ausgestaltung kann es günstig sein, wenn das Prallteil als Rohr ausgestaltet ist oder ein Rohr umfasst, zumindest abschnittsweise, wobei das Rohr insbesondere aus einem Metallmaterial gefertigt ist und/oder eine Ummantelung aus einem Kunststoff- oder Gummimaterial aufweist.

Das Waschportal kann eine lichte Höhe aufweisen, die sich von der Aufstellfläche bis zum mindestens einen Querträger erstreckt. Insbesondere kann anhand der lichten Höhe ermittelt werden, Fahrzeuge welcher Höhe mit der Fahrzeugwaschanlage noch gereinigt werden können.

Vorteilhaft kann es sein, wenn das Prallteil in Höhenrichtung weniger weit reicht als ungefähr die Hälfte der lichten Höhe, vorzugsweise weniger als ungefähr ein Drittel, noch bevorzugter weniger als ungefähr ein Viertel der lichten Höhe, beispielsweise weniger als ein Fünftel der lichten Höhe. Beispielsweise erstreckt sich der Kontaktabschnitt des Prallteils in Höhenrichtung, wobei er jedoch sich nur, wie vorstehend erläutert, über einen Teil der lichten Höhe erstreckt. Dadurch kann zum Beispiel ein Kontakt des Prallteils mit einem Außenspiegel des Fahrzeugs vermieden werden, wenn sich dessen Position während des Waschvorgangs nicht ändert und das Fahrzeug dementsprechend unbewegt auf dem Waschplatz positioniert bleibt und/oder keine Fahrzeugtür geöffnet wird. In diesem Fall kann das Prallteil den Außenspiegel während der Vorwärtsbewegung und der Rückwärtsbewegung nicht kontaktieren, und die Sicherungsvorrichtung wird nicht wirksam.

Beispielsweise ragt das Prallteil in der Höhenrichtung bis maximal ungefähr 100 cm über die Aufstellfläche, bevorzugt bis maximal ungefähr 80 cm über die Aufstellfläche. Als vorteilhaft kann sich zum Beispiel eine Ausführungsform erweisen, bei der das Prallteil bis ungefähr 60 cm über die Aufstellfläche ragt, damit beispielweise Kollisionen mit Außenspiegeln vermieden werden können.

Vorteilhafterweise umfasst die mindestens eine Sicherungsvorrichtung mindestens ein Rückstellelement oder bildet ein solches aus, entgegen dessen Wirkung das Prallteil von der Nichtbetätigungsstellung in die mindestens eine Betätigungsstellung überführbar ist. Durch das Rückstellelement wird eine zuverlässige Funktion der Sicherungsvorrichtung sichergestellt. Vorteilhafterweise kann eine unbeabsichtigte Bewegung vermieden werden, zum Beispiel lediglich infolge einer Bewegung des Waschportals ohne Kollision mit dem Hindernis.

Günstigerweise kann das Rückstellelement ein Vorspannelement bilden, über das das Prallteil in Richtung auf die Nichtbetätigungsstellung vorgespannt ist.

Das Rückstellelement kann zum Beispiel ein mechanisches Federelement sein oder umfassen, insbesondere eine Zugfeder. Dies ermöglicht eine konstruktiv einfache Ausgestaltung.

Vorgesehen sein kann zum Beispiel, dass das Rückstellelement innerhalb des Halteteils bis in das Prallteil verläuft und jeweils an diesen festgelegt ist, wobei Hülsen oder Rohre des Halteteils und des Prallteils in der Nichtbetätigungsstellung des Prallteils vorzugsweise stirnseitig aneinander anliegen. In der Praxis zeigt sich dadurch, dass eine zuverlässige Funktion der Sicherungsvorrichtung festgestellt werden kann. Bei vorstehend beschriebener Ausgestaltung kann vorzugsweise eine gelenkige Verbindung des Halteteils und des Prallteils ähnlich einem Kugelgelenk ermöglicht werden.

Die Sensoreinrichtung kann zum Beispiel ein kontaktloser Anwesenheitssensor oder Näherungssensor sein oder einen solchen umfassen. Der kontaktlose Sensor ermöglicht eine zuverlässige Funktion, speziell auch bei einer Positionierung der Sicherungsvorrichtung in einem Schmutzbereich der Fahrzeugwaschanlage.

Die Sensoreinrichtung kann beispielsweise am Halteteil gehalten sein. Zu diesem Zweck kann ein Vorsprung am Halteteil vorgesehen sein, an dem die Sensoreinrichtung montiert ist. Hierbei ist zum Beispiel der Anwesenheitssensor oder Näherungssensor vorgesehen, und ein korrespondierender Vorsprung, zum Beispiel in Form einer Schaltfahne, kann am Prallteil angeordnet sein.

Die Sensoreinrichtung kann alternativ am Prallteil gehalten sein, wobei ebenso ein Anwesenheitssensor oder Näherungssensor vorgesehen sein kann und ein korrespondierender Vorsprung.

Vorgesehen sein kann, dass das Prallteil relativ zum Halteteil zum Überführen von der Nichtbetätigungsstellung in die mindestens eine Betätigungsstellung verschwenkbar oder verkippbar ist.

Das Prallteil kann relativ zum Halteteil zum Überführen von der Nichtbetätigungsstellung in die mindestens eine Betätigungsstellung beispielsweise in zwei Raumrichtungen bewegbar sein, die im Winkel zueinander ausgerichtet und insbesondere senkrecht zueinander ausgerichtet sind. Insbesondere kann die Möglichkeit bestehen, dass das Prallteil in eine Richtung bewegbar ist, die sich als Überlagerung der beiden genannten Raumrichtungen ergibt.

Vorgesehen sein kann, dass das Prallteil relativ zum Halteteil zum Überführen von der Nichtbetätigungsstellung in die mindestens eine Betätigungsstellung in Richtung auf den Waschplatz bewegbar ist und/oder in vom Waschplatz wegweisender Richtung.

Vorgesehen sein kann beispielsweise, dass das Prallteil relativ zum Halteteil zum Überführen von der Nichtbetätigungsstellung in die mindestens eine Betätigungsstellung weg von der Aufstellfläche bewegbar und/oder in Richtung auf die Aufstellfläche bewegbar ist.

In der Nichtbetätigungsstellung kann das Prallteil zum Beispiel auf dem Halteteil aufliegen und dadurch eine definierte Position einnehmen.

Als günstig kann es sich erweisen, wenn das Halteteil mindestens ein Anlageelement umfasst und wenn das Prallteil mindestens ein korrespondierendes Anlageelement umfasst, über die das Prallteil und das Halteteil in der Nichtbetätigungsstellung aneinander anliegen, wodurch eine definierte Position des Prallteils am Halteteil eingenommen wird. Die Anlageelemente liegen vorzugsweise flächig aneinander an.

Beispielsweise sind jeweils zwei Anlageelemente vorgesehen, die im Winkel zueinander ausgerichtet sind, vorzugsweise 90° oder im Wesentlichen 90°. Die Anlageelemente können miteinander beispielsweise entlang einer gemeinsamen Kante verbunden sein. Vorzugsweise liegen die jeweiligen Anlageelemente flächig aneinander an.

Ein jeweiliges Anlageelement kann einsegmentig oder mehrsegmentig sein.

Die Fahrzeugwaschanlage umfasst vorteilhafterweise mindestens eine Überwachungseinrichtung oder bildet eine solche aus, die an der Vorderseite am Waschportal angeordnet ist, wobei über die Überwachungseinrichtung eine Fehlpositionierung und/oder eine Überbreite des Fahrzeugs am Waschplatz insbesondere kontaktbehaftet erfassbar ist. Dadurch kann die korrekte Positionierung des Fahrzeugs vorzugsweise bereits vor dem Waschvorgang ermittelt werden und/oder während der Bewegung des Waschportals in der Vorwärtsrichtung. Alternativ oder ergänzend kann eine Überbreite festgestellt werden.

Über die Überwachungseinrichtung ist zum Beispiel eine lichte Breite am Waschplatz bestimmt, bezogen auf eine Querrichtung der Fahrzeugwaschanlage, wobei ein innerhalb der lichten Breite positioniertes Fahrzeug als korrekt positioniert und/oder als nicht überbreit angesehen wird.

Das Prallteil ist in der Querrichtung vorteilhafterweise außerhalb der lichten Breite oder maximal an einer Grenze der lichten Breite angeordnet. Sofern sich keine Positionsänderung des Fahrzeugs während des Waschvorgangs ergibt und/oder eine Änderung der Breite - beispielsweise infolge einer geöffneten Fahrzeugtür-, wird das Prallteil beim Verfahren des Waschportals nicht kontaktiert. Hierdurch kann das Prallteil wie eingangs erläutert bei einer Änderung der Positionierung des Fahrzeugs und/oder bei einer Änderung der Breite kontaktiert und die Sicherungsvorrichtung wirksam werden.

Unter vorstehenden Ausführungen kann insbesondere verstanden werden, dass das Prallteil innenseitig maximal so weit in Richtung des Waschplatzes positioniert ist, wie die lichte Breite reicht. Vorteilhafterweise ist das Prallteil weiter außenseitig angeordnet.

Die Fahrzeugwaschanlage umfasst vorteilhafterweise eine Steuereinrichtung, um den Betrieb der Fahrzeugwaschanlage zu steuern und/oder zu regeln.

Die Steuereinrichtung kann einen Signaleingang für ein Signal der Überwachungseinrichtung zur Kopplung mit dieser aufweisen, wobei ein Sensor der mindestens einen Sensoreinrichtung über den Signaleingang mit der Steuereinrichtung gekoppelt ist, wobei bei Anliegen eines Signals am Signaleingang die Antriebseinrichtung und/oder ein Reinigungsaggregat der Fahrzeugwaschanlage deaktivierbar ist. Signale sowohl der Überwachungseinrichtung als auch der mindestens einen Sensoreinrichtung können an demselben Signaleingang anliegen. Dadurch kann eine konstruktiv einfache Ausgestaltung der Fahrzeugwaschanlage erzielt werden.

Die zuletzt erwähnte Ausführungsform kann sich auch als vorteilhaft für ein Nachrüsten einer bestehenden Fahrzeugwaschanlage mit der Sicherungsvorrichtung erweisen.

Zu letzterem Zweck kann es günstig sein, wenn die mindestens eine Sicherungsvorrichtung als vormontierte Baueinheit ausgestaltet ist, die das Halteteil, das Prallteil und einen Sensor der Sensoreinrichtung umfasst, wobei das Halteteil mit dem Waschportal verbindbar ist und der Sensor kabellos oder kabelgebunden mit einer Steuereinrichtung der Fahrzeugwaschanlage koppelbar ist.

Wie eingangs erwähnt, betrifft die vorliegende Erfindung auch ein Verfahren. Ein erfindungsgemäßes Verfahren zum Betreiben einer Fahrzeugwaschanlage, insbesondere der vorstehend beschriebenen Art, sieht Folgendes vor:
Bewegen eines Waschportals in eine Rückwärtsrichtung und Erfassen eines Kontaktes eines Prallteils einer Sicherungsvorrichtung während der Rückwärtsbewegung mit einem Hindernis, insbesondere einer Fahrzeugkomponente, sowie Deaktivieren einer Antriebseinrichtung für das Waschportal und/oder eines Reinigungsaggregates der Fahrzeugwaschanlage, abhängig von einem diesbezüglichen Erfassungssignal.

Die Vorteile, die bereits im Zusammenhang mit der Erläuterung der erfindungsgemäßen Fahrzeugwaschanlage erwähnt wurden, können bei Ausübung des Verfahrens ebenfalls erzielt werden. Diesbezüglich kann auf die voranstehenden Ausführungen verwiesen werden.

Vorteilhafte Ausführungsbeispiele des erfindungsgemäßen Verfahrens ergeben sich durch vorteilhafte Ausführungsformen der erfindungsgemäßen Fahrzeugwaschanlage. Auf voranstehende Ausführungen wird verwiesen.

Die nachfolgende Beschreibung bevorzugter Ausführungsformen der Erfindung dient im Zusammenhang mit der Zeichnung der näheren Erläuterung der Erfindung. Es zeigen:
Figur 1: eine perspektivische Darstellung der erfindungsgemäßen Fahrzeugwaschanlage und schematisch Konturen eines Fahrzeugs;
Figur 2: eine schematische Draufsicht auf die Fahrzeugwaschanlage aus Figur 1;
Figur 3: eine vergrößerte Darstellung von Detail A in Figur 1, wobei ein Prallteil einer Sicherungsvorrichtung in einer Nichtbetätigungsstellung gezeigt ist;
Figur 4: eine Darstellung entsprechend Figur 3, wobei das Prallteil eine (erste) Betätigungsstellung einnimmt;
Figur 5: eine Darstellung entsprechend Figur 3, wobei das Prallteil eine (zweite) Betätigungsstellung einnimmt;
Figur 6: eine Längsschnittansicht der Sicherungsvorrichtung in einer Teildarstellung;
Figuren 7 bis 9: Darstellungen einer andersartigen Ausführungsform der Sicherungsvorrichtung der erfindungsgemäßen Fahrzeugwaschanlage; und
Figuren 10 bis 12: Darstellungen einer weiteren Ausführungsform einer Sicherungsvorrichtung der erfindungsgemäßen Fahrzeugwaschanlage.

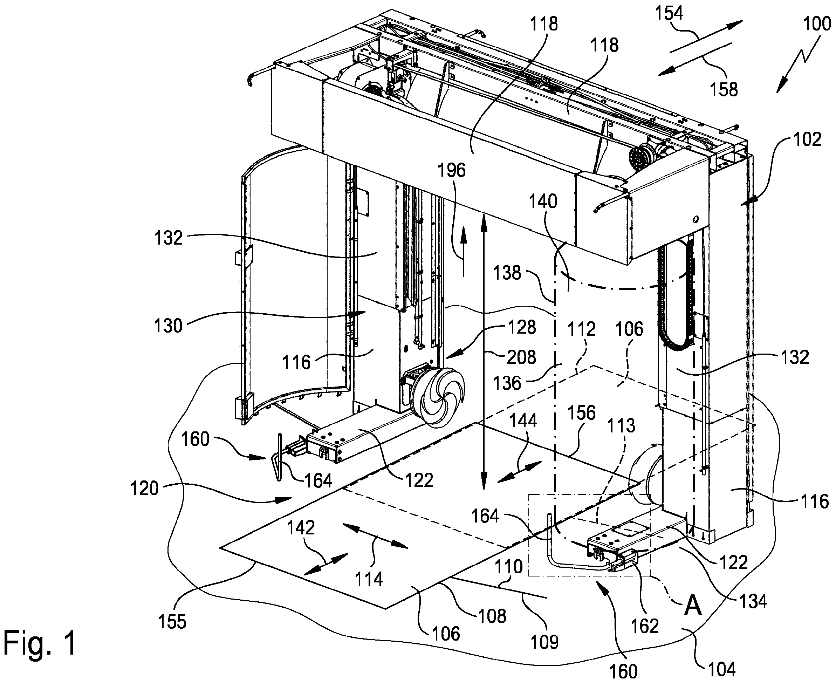

Figur 1 zeigt perspektivisch und teilweise schematisch eine insgesamt mit dem Bezugszeichen 100 belegte vorteilhafte Ausführungsform der erfindungsgemäßen Fahrzeugwaschanlage. Die Fahrzeugwaschanlage 100 ist als Portalwaschanlage ausgestaltet, die ein Waschportal 102 umfasst. Das Waschportal 102 ist im bestimmungsgemäßen Gebrauch auf einer Aufstellfläche 104 positioniert, auf der auch ein zu reinigendes Fahrzeug 106 aufgestellt ist.

In der Zeichnung ist das Fahrzeug 106 nur anhand einer durchgezogenen Linie 108 symbolisiert, die die Außenkontur des Fahrzeugs 106 darstellt. Eine Linie 109, ebenfalls durchgezogen, symbolisiert eine geöffnete Fahrzeugtür, gekennzeichnet mit dem Bezugszeichen 110.

Wird das Waschportal 102 relativ zum Fahrzeug 106 verfahren, ändert sich deren Relativpositionierung. Eine gestrichelte Linie 112 symbolisiert ebenfalls das Fahrzeug 106, wobei in diesem Fall das Waschportal 102 relativ zum Fahrzeug 106 eine andersartige Position einnimmt als im vorstehend beschriebenen Fall - verfahren wurde dementsprechend das Waschportal 102, nicht das Fahrzeug 106. Eine gestrichelte Linie 113 symbolisiert auch in diesem Fall die Fahrzeugtür 110, die geöffnet ist.

Das Waschportal 102 umfasst zwei in einer Querrichtung 114 der Fahrzeugwaschanlage 100 voneinander beabstandete und in Höhenrichtung erstreckte Träger 116. Die Träger 116 können auch als Portalsäulen bezeichnet werden.

Die Träger 116 sind obenseitig über mindestens einen Querträger 118 miteinander verbunden, der auch als Traverse bezeichnet werden kann.

Positions- und Orientierungsangaben beziehen sich vorliegend auf einen bestimmungsgemäßen Gebrauch der Fahrzeugwaschanlage 100.

Zwischen den Trägern 116 ist an der Aufstellfläche 104 ein Waschplatz 120 definiert, auf dem das Fahrzeug 106 positioniert ist.

Untenseitig, der Aufstellfläche 104 zugewandt, weisen die Träger 116 jeweils einen Fahrfuß 122 auf. Über den Fahrfuß kann das Waschportal 102 auf der Aufstellfläche 104 entlang einer in der Zeichnung nicht dargestellten Führung verfahren werden. Die Bewegung erfolgt geradlinig.

Zum Antrieb des Waschportals 102 ist eine Antriebseinrichtung 124 am jeweiligen Fahrfuß 122 vorgesehen.

Eine Steuereinrichtung 126 steuert und/oder regelt den Betrieb des Waschportals 102 und ist unter anderem mit den Antriebseinrichtungen 124 gekoppelt, um diese zu aktivieren oder zu deaktivieren.

Das Waschportal 102 weist eine Vorderseite 128 auf. Im bestimmungsgemäßen Gebrauch ist die Vorderseite 128 einfahrtseitig angeordnet. Der Fahrzeugführer fährt auf das Waschportal 102 bis zu einer vorgegebenen Position an der Vorderseite 128. An der abgewandten Seite weist das Waschportal 102 eine rückwärtige Seite 130 auf.

Die Fahrfüße 122 sind an der rückwärtigen Seite 130 angeordnet. Oberhalb der Fahrfüße 122 ist ein jeweiliger Freiraum 132 vorhanden.

Bezogen auf die Querrichtung 114 weist der jeweilige Fahrfuß 122 einen Versatz 134 in Richtung des Waschplatzes 120 bezüglich einer vom Waschportal 102 definierten Außenkontur auf.

Zum Reinigen des Fahrzeugs umfasst die Fahrzeugwaschanlage Reinigungsaggregate 136. Die Reinigungsaggregate 136 umfassen insbesondere Seitenwaschbürsten zum Abreinigen von Seitenflächen des Fahrzeugs 106. In Figur 1 ist schematisch eine durch eine strichpunktierte Linie 138 symbolisierte Seitenwaschbürste 140 gezeigt.

Die Seitenwaschbürsten 140 können entlang des Querträgers 118 in der Querrichtung 114 verschoben und an das Fahrzeug 106 zugestellt werden. Figur 1 stellt die Seitenwaschbürste 140 im drehenden, d. h. angetriebenen, Zustand dar, wobei Reinigungselemente aufgefächert sind. Die Seitenwaschbürste 140 nimmt dabei eine Endstellung bezogen auf die Querrichtung 114 ein, in der sie so weit wie möglich nach außen verschoben ist und im Freiraum 132 angeordnet ist.

Die Reinigungsaggregate 136 können in an sich bekannter Weise ferner zum Beispiel eine Dachbürste, Radwaschbürsten und/oder Hochdruck-Sprüheinrichtungen umfassen.

Bei Benutzung der Fahrzeugwaschanlage 100 positioniert der Fahrzeugführer das Fahrzeug 106 einfahrtseitig vor der Vorderseite 128. Wünschenswert ist es hierbei, wenn eine Längsrichtung 142 des Fahrzeugs 106 mit einer Längsrichtung 144 der Fahrzeugwaschanlage so zusammenfällt, dass das Fahrzeug 106 mittig in Bezug auf eine Mittellängsebene 146 der Fahrzeugwaschanlage positioniert ist. In diesem Fall ist das Fahrzeug 106 korrekt ausgerichtet und nimmt keine Schiefstellung ein.

Eine Überwachungseinrichtung 148 der Fahrzeugwaschanlage 100 dient dazu, die korrekte Positionierung des Fahrzeugs 106 und/oder eine mögliche Überbreite des Fahrzeugs 106 zu erfassen. Letzterer Fall könnte dann auftreten, wenn das Fahrzeug 106 breiter ist als eine lichte Breite 150, die von der Überwachungseinrichtung 148 definiert ist.

Die Überwachungseinrichtung 148 ist beispielsweise derart ausgestaltet, wie dies in der nicht-vorveröffentlichten Patentanmeldung DE 10 2022 111 978.5 derselben Anmelderin beschrieben ist (darin als "Sicherungsvorrichtung" bezeichnet). Hierbei kommt zum Beispiel mindestens ein Tastteil 152 an der Vorderseite 128 zum Einsatz, um ein Hindernis, insbesondere das Fahrzeug 106, kontaktbehaftet zu erfassen. Ein diesbezügliches Signal kann einem Signaleingang der Steuereinrichtung 126 zugeführt werden. Bei einer Kollision kann die Antriebseinrichtung 124 und/oder können die Reinigungsaggregate 135 deaktiviert werden.

Nachfolgend wird angenommen, dass das Fahrzeug 106 keine Überbreite aufweist und am Waschplatz 120 innerhalb der lichten Breite 150 so positioniert ist, dass keine Kollision mit der Überwachungseinrichtung 148 erfolgt. Dementsprechend geht die Steuereinrichtung 126 davon aus, dass das Fahrzeug 106 gewaschen werden kann.

Im Betrieb mit einem Waschportal kann das Waschportal 102 in einer Vorwärtsrichtung 154 bewegt werden, in der das Fahrzeug 106 üblicherweise von der Front 155 zum Heck 156 überfahren wird.

Umgekehrt kann das Waschportal 102 in einer Rückwärtsrichtung 158 verfahren werden. Hierbei wird das Fahrzeug 106 vom Heck 156 bis zur Front 155 überfahren.

Bei bestimmungsgemäßem und sachgemäßem Gebrauch ändert sich die Positionierung des Fahrzeugs 106 und/oder dessen Breite während des Ablaufes des Waschprogrammes nicht, welches ordnungsgemäß durchgeführt werden kann.

Bei unsachgemäßem Gebrauch kann allerdings der Fall eintreten, dass sich die Breite des Fahrzeugs 106 ändert. Dies ist schematisch in Figur 1 am Beispiel der geöffneten Fahrzeugtür 110 dargestellt. Hierbei wird zunächst angenommen, dass das Waschportal 102 in der Rückwärtsrichtung 158 bewegt ist und sich von hinten auf die Fahrzeugtür 110 zu bewegt.

Alternativ zur Breitenänderung des Fahrzeugs 106 könnte möglicherweise eine Fehlpositionierung während des Waschprogrammes dadurch erfolgen, dass der Fahrzeugführer das Fahrzeug 106 bewegt.

Zur Erhöhung der Betriebssicherheit umfasst die Fahrzeugwaschanlage 100 an dem Waschportal 102 rechts und links jeweils eine Sicherungsvorrichtung 160. Die Sicherungsvorrichtungen 160 sind auf einander gegenüberliegenden Seiten des Waschplatzes 120 jeweils an den Trägern 116 angeordnet, insbesondere am jeweiligen Fahrfuß 122.

Die Sicherungsvorrichtungen 160 sind vorliegend funktionsgleich ausgestaltet und insbesondere symmetrisch bezüglich der Mittellängsebene 146 ausgebildet. Nachfolgend wird daher nur auf eine Sicherungsvorrichtung 160 eingegangen. Die diesbezüglichen Ausführungen gelten in entsprechender Weise für die weitere Sicherungsvorrichtung 160.

Die Sicherungsvorrichtung 160 ist an der rückwärtigen Seite 130 angeordnet. Sie umfasst insbesondere ein Halteteil 162 zum Festlegen am Träger 116, insbesondere am Fahrfuß 122, sowie ferner ein Prallteil 164 zum Erfassen eines Hindernisses, insbesondere des Fahrzeugs 106, speziell der geöffneten Fahrzeugtür 110.

Nachfolgend wird unter Verweis insbesondere auf die Figuren 1 sowie 3 bis 6 näher auf die Konstruktion und die Funktionsweise der Sicherungsvorrichtung 160 eingegangen.

Über das Halteteil 162 ist die Sicherungsvorrichtung 160 am Fahrfuß 122 festgelegt, beispielsweise durch Verschraubung. Das Halteteil 162 ist an der dem Waschplatz 120 abgewandten Seite des Fahrfußes 122 angeordnet. Hierbei ist das Halteteil 162 im Versatz 134 platzsparend positioniert.

Bezogen auf die Längsrichtung 144 ist die Sicherungsvorrichtung hinten am Waschportal 102 angeordnet, wobei das Halteteil 162 nahezu endseitig am Fahrfuß 122 festgelegt ist.

Das Halteteil 162 ist beispielsweise ein gekantetes Metallteil und bildet einen Rahmen 166, an dem im vorliegenden Beispiel eine Hülse 168 gehalten ist. Der Rahmen 166 umfasst einen Vorsprung 170, der ein Anlageelement 172 bildet. Ein weiteres Anlageelement 173 grenzt an das Anlageelement 172 an und ist relativ zu diesem in einem Winkel von 90° oder im Wesentlichen 90° ausgerichtet. Die Anlageelemente 172, 173 sind jeweils planar ausgestaltet, wobei das Anlageelement 172 zugleich ein Auflageelement 174 ausbildet.

Weiter umfasst das Halteteil 162 einen Halteabschnitt 176, der vorliegend bezogen auf die Längsrichtung 144 endseitig angeordnet ist.

Am Halteabschnitt 176 ist eine Sensoreinrichtung 178 der Sicherungsvorrichtung 160 gehalten, die insbesondere einen Anwesenheitssensor 180 umfasst. Der Anwesenheitssensor 180 steht, beispielsweise über eine in der Zeichnung nicht dargestellte elektrische Leitung, mit dem Signaleingang der Steuereinrichtung 126 in Wirkverbindung, um dieser ein Erfassungssignal zu übermitteln. Der Signaleingang ist vorliegend derselbe wie für die Überwachungseinrichtung 148.

Das Prallteil 164 ist am Halteteil 162 auslenkbar gehalten. Das Prallteil umfasst im vorliegenden Beispiel ein Rohr 182, beispielsweise aus einem Metallmaterial. Das Rohr 182 kann zum Beispiel eine Ummantelung aus einem Gummimaterial oder Kunststoffmaterial umfassen. Andersartige Ausgestaltungen des Prallteils 164 sind denkbar.

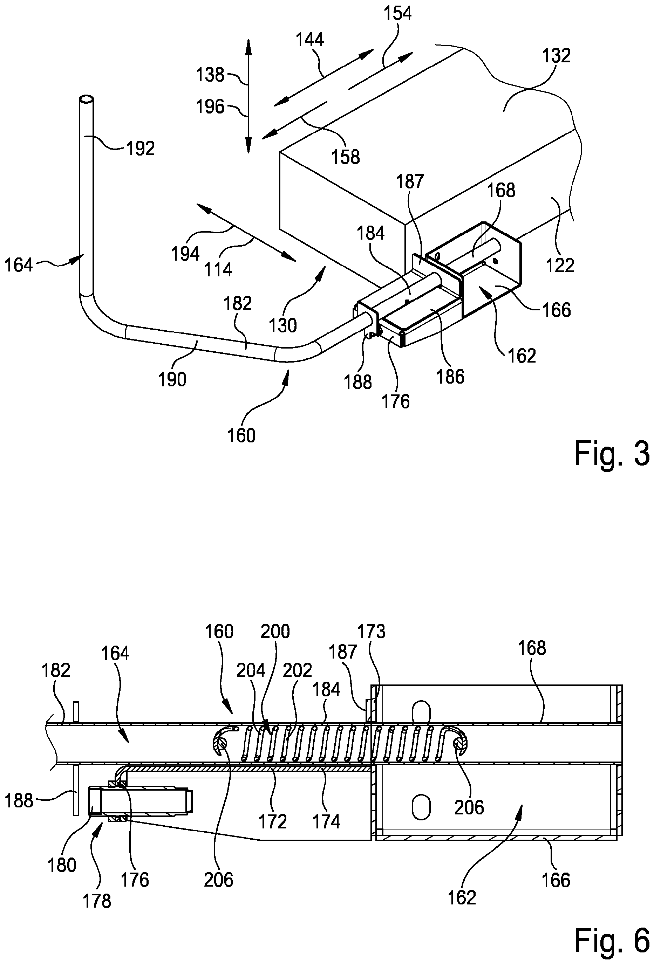

Endseitig bildet das Rohr 182 beispielsweise eine Hülse 184. Die Hülse 184 liegt im vorliegenden Beispiel stirnseitig an der Hülse 168 an (Figur 6).

Das Prallteil 164 umfasst vorliegend ein zweisegmentiges Anlageelement 186 sowie ein weiteres Anlageelement 187. Die Anlageelemente 186, 187 sind korrespondierend zu den Anlageelementen 172 bzw. 173 ausgestaltet und im vorliegenden Beispiel planar. Die Anlageelemente 186, 187 sind in einem Winkel von 90° oder im Wesentlichen 90° zueinander ausgerichtet und entlang einer gemeinsamen Kante miteinander verbunden. Beispielsweise werden die Anlageelemente 186, 187 über ein Winkelstück zum Beispiel aus einem Metallmaterial gefertigt. Das Rohr 182 durchgreift das Anlageelement 187.

Am Rohr 182 ist ein Vorsprung 188 festgelegt, der eine Schaltfahne bildet, deren Anwesenheit und/oder deren Abwesenheit vom Anwesenheitssensor 180 erfasst werden kann.

Das Prallteil 164 umfasst einen Tragabschnitt 190 und einen Kontaktabschnitt 192.

Im vorliegenden Beispiel erstreckt sich der Tragabschnitt 190 parallel zur Aufstellfläche 104, insbesondere horizontal. Der Tragabschnitt 190 weist zunächst in Längsrichtung nach hinten weg vom Halteteil 162 und anschließend schräg in Richtung des Waschplatzes 120. Eine andersartige Form ist denkbar.

Der Kontaktabschnitt 192 ist mit dem Tragabschnitt 190 verbunden und ist in Höhenrichtung ausgerichtet, insbesondere vertikal.

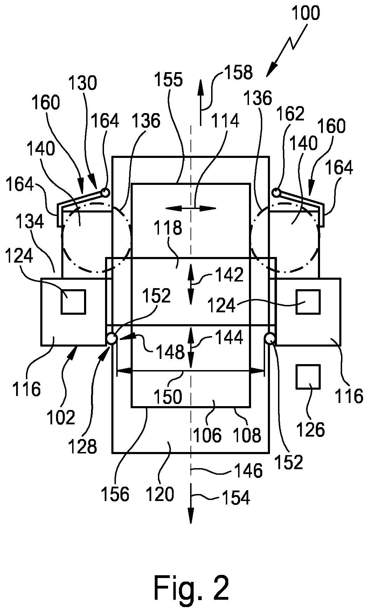

Bezogen auf die Querrichtung 114 ist der Kontaktabschnitt 192 außerhalb der lichten Breite 150 angeordnet (Figur 2). Sofern das Fahrzeug 106 als nicht überbreit und korrekt positioniert erkannt wurde, erfolgt daher, außer bei einer Breitenänderung und/oder einer Umpositionierung, keine Kollision des Fahrzeugs 106 mit dem Prallteil 164 während des Waschprogrammes.

In einer Nichtbetätigungsstellung, die in den Figuren 1 bis 3 und 6 gezeigt ist, liegen die Anlageelemente 172 und 186 sowie 173 und 187 flächig aneinander an, wodurch eine definierte Position des Prallteils 164 am Halteteil 162 definiert ist. Insbesondere liegt das Anlageelement 186 auf dem Auflageelement 174 auf.

Der Vorsprung 188 überdeckt den Anwesenheitssensor 180, so dass die Steuereinrichtung 126 feststellen kann, dass das Prallteil 164 die Nichtbetätigungsstellung einnimmt.

Es versteht sich, dass zum Beispiel bei Vorliegen keines Signals der Sensoreinrichtung 178 diese Annahme von der Steuereinrichtung 126 getroffen werden kann. Andererseits ist denkbar, dass die Sensoreinrichtung auch bei der Nichtbetätigungsstellung ein diesbezügliches Signal an die Steuereinrichtung 126 überträgt.

Ausgehend von der Nichtbetätigungsstellung kann das Prallteil 164 in mindestens eine Betätigungsstellung überführt werden. Insbesondere ist eine Bewegung in mehreren Raumrichtungen denkbar.

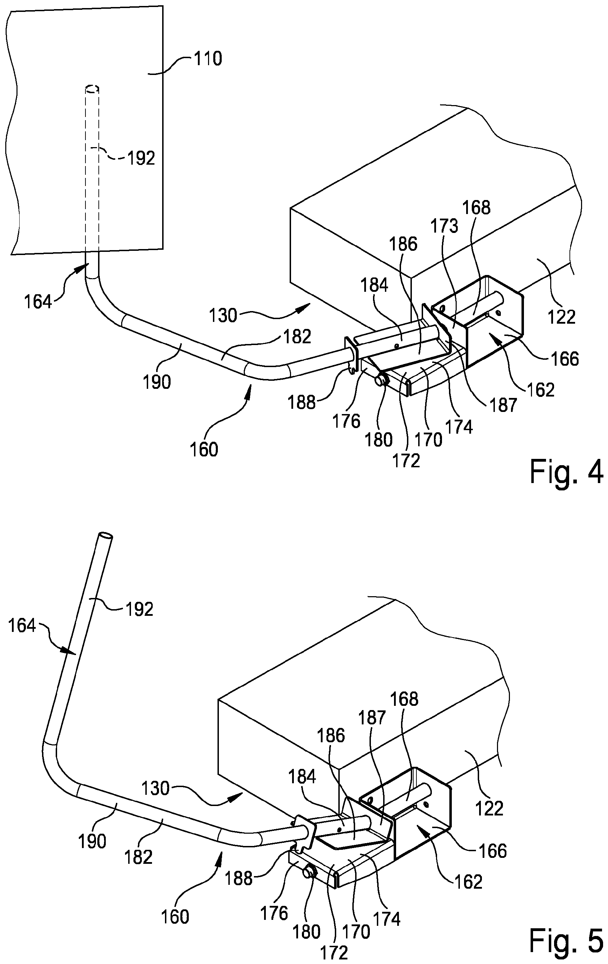

Das Prallteil 164 kann insbesondere relativ zum Halteteil 162 durch Verschwenken oder Verkippen ausgelenkt werden (Figuren 4 und 5).

Beispielsweise stellt Figur 4 eine Bewegung des Prallteils 164 in der Querrichtung 114 als erste Raumrichtung 194 dar. Die Bewegung kann nach innen in Richtung auf den Waschplatz 120 erfolgen oder alternativ nach außen, weg vom Waschplatz 120. Der erstgenannte Fall ist in Figur 4 dargestellt.

Alternativ oder ergänzend kann eine Bewegung in einer Höhenrichtung 196 erfolgen, die eine zweite Raumrichtung 198 darstellt. Dieser Fall ist in Figur 5 dargestellt. Beispielsweise kann das Prallteil 164, wenn es etwa auf einem Hindernis aufsitzt, angehoben werden. Umgekehrt ist eine Bewegung des Prallteils 164 nach unten grundsätzlich ebenfalls denkbar (nicht gezeigt).

Eine Auslenkung des Prallteils 164 in eine Richtung, die sich durch eine Überlagerung beider Raumrichtungen 194, 198 ergibt, ist ebenfalls möglich.

Die Auslenkung des Prallteils von der Nichtbetätigungsstellung in die mindestens eine Betätigungsstellung erfolgt entgegen einer Rückstellkraft einer Rückstelleinrichtung 200 der Sicherungsvorrichtung 160. Zu diesem Zweck umfasst die Rückstelleinrichtung 200 ein Rückstellelement 202. Vorliegend ist das Rückstellelement 202 als Schraubenfeder ausgestaltet, bei der es sich insbesondere um eine Zugfeder 204 handelt.

Die Zugfeder 204 verläuft innenseitig im Halteteil 162 und im Prallteil, insbesondere von der Hülse 168 bis in die Hülse 184 hinein, und ist an diesen Hülsen 168, 184 jeweils festgelegt, zum Beispiel über ein Halteglied 206.

Bei einer Verkippung des Prallteils 164 wird das Rückstellelement 202 auf Zug beansprucht. Entfällt die auslenkende Kraft, kehrt das Prallteil selbsttätig wieder von der Betätigungsstellung in die Nichtbetätigungsstellung zurück.

Infolge der stirnseitigen Anlage der Hülsen 168, 184 aneinander ist zwischen diesen gewissermaßen eine Art Kugelgelenk definiert.

Das Rückstellelement 202 bildet zugleich ein Vorspannelement, das das Prallteil 164 mit einer Vorspannkraft in Richtung der Nichtbetätigungsstellung beaufschlagt.

Wie insbesondere aus Figur 1 hervorgeht, verläuft das Prallteil 164 mit dem Tragabschnitt 190 unterhalb der Seitenwaschbürste 140 selbst dann, wenn diese die Endstellung im Freiraum 132 einnimmt und drehend angetrieben ist. Der Kontaktabschnitt 192 verläuft seitlich neben der Seitenwaschbürste 140. Dadurch ist sichergestellt, dass das Prallteil 164 außerhalb des Wirkungsbereichs der Seitenwaschbürste 140 angeordnet ist und deren Funktion nicht beeinträchtigt.

Ergänzt wird, dass das Prallteil 164 auch außerhalb des Wirkungsbereichs der weiteren Reinigungsaggregate 136 angeordnet ist.

Bezogen auf die Höhenrichtung 196 erstreckt sich das Prallteil 164 nur so weit, dass mit einem korrekt positionierten Fahrzeug, das nicht überbreit ist, keine Kollision insbesondere im Bereich eines Außenspiegels erfolgt. Beispielsweise ist die Erstreckung bezogen auf eine lichte Höhe 208 des Waschportals 102 geringer als ein Viertel, vorzugsweise weniger als ein Fünftel der lichten Höhe 208. Es zeigt sich in der Praxis, dass diese Höhe ausreichend ist, um geöffnete Fahrzeugtüren 110 oberhalb von Fahrzeugschwellern zuverlässig zu erfassen.

Nachfolgend wird die Funktionsweise der Sicherungsvorrichtung 160 und der Fahrzeugwaschanlage 100 beschrieben.

Angenommen wird hierbei, dass das Fahrzeug 106 anfänglich korrekt positioniert und nicht überbreit ist, was über die Überwachungseinrichtung 148 festgestellt werden kann. Weiter wird angenommen, dass das Waschportal 102 zunächst in der Vorwärtsrichtung 154 über das Fahrzeug 106 hinweggefahren ist und sich nun in der Rückwärtsrichtung 158 bewegt.

Wird hierbei die Fahrzeugbreite verändert, beispielsweise die Fahrzeugtür 110 geöffnet (Linie 108), kollidiert das Prallteil 164 insbesondere mit dem Kontaktabschnitt 192 mit der Fahrzeugtür 110.

Infolge der Bewegung des Waschportals 102 wird das Prallteil 164 von der anfänglichen Nichtbetätigungsstellung in eine Betätigungsstellung überführt, wie dies vorliegend in Figur 4 angedeutet ist. Durch die Auslenkung wird der Vorsprung 188 vom Anwesenheitssensor 180 wegbewegt. Ein diesbezügliches Erfassungssignal wird der Steuereinrichtung 126 bereitgestellt, woraufhin die Antriebseinrichtung 124 und die Reinigungsaggregate 136 deaktiviert werden.

Dies dient dazu, eine Beschädigung des Fahrzeugs 106 zu vermeiden und/oder eine mögliche Verletzung des Fahrzeugführers, der sich möglicherweise im Bereich der Fahrzeugtür 110 aufhält.

Über die Sicherungsvorrichtung 160 kann eine Breitenänderung beispielsweise infolge der geöffneten Fahrzeugtür 110 auch dann erfasst werden, wenn sich das Waschportal 102 in der Vorwärtsrichtung 154 bewegt. Dies ist in Figur 1 durch die gestrichelte Linie 109 dargestellt. Bei einer Kollision des Prallteils 164 mit der Fahrzeugtür 110 wird das Prallteil 164 weg vom Waschplatz verschwenkt, entgegen der in Figur 4 dargestellten Stellung nach außen. Auch in diesem Fall kann die Auslenkung über die Sensoreinrichtung 178 ermittelt werden.

Entsprechendes gilt für ein Verschwenken in Höhenrichtung 196 sowie in eine Richtung, die sich durch eine Superposition der Raumrichtungen 194, 198 ergibt.

Es versteht sich, dass auch eine Umpositionierung des Fahrzeugs 106 zu einem Kontakt mit dem Prallteil 164 und dadurch zu einer Sicherheitsabschaltung der Fahrzeugwaschanlage 100 führen kann.

Weiter versteht es sich, dass der Vorteil auf beiden Seiten des Waschportals 102 erzielt werden kann, infolge der beiden Sicherungsvorrichtungen 160.

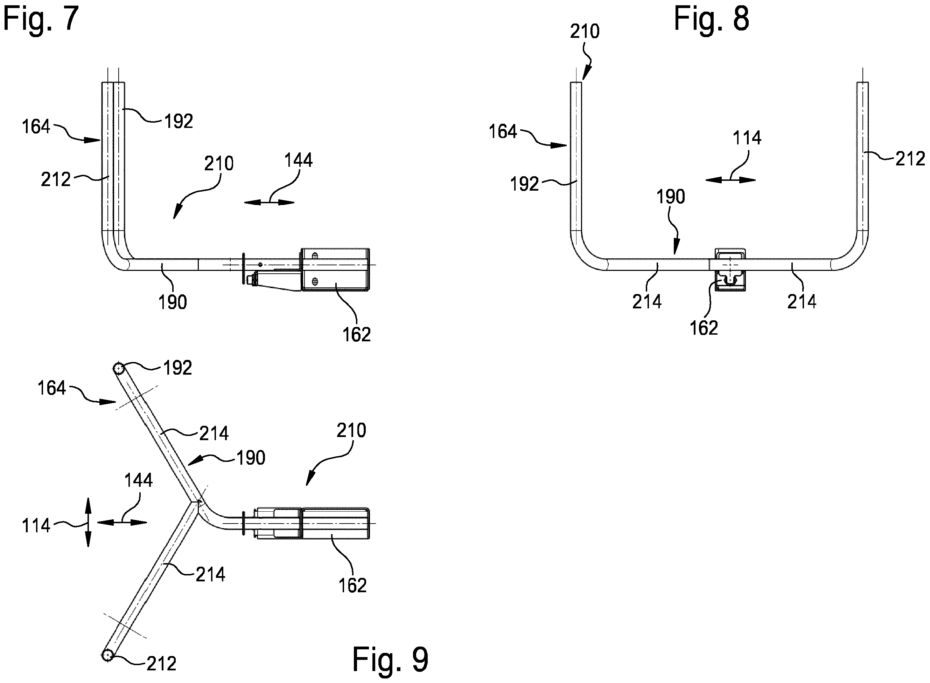

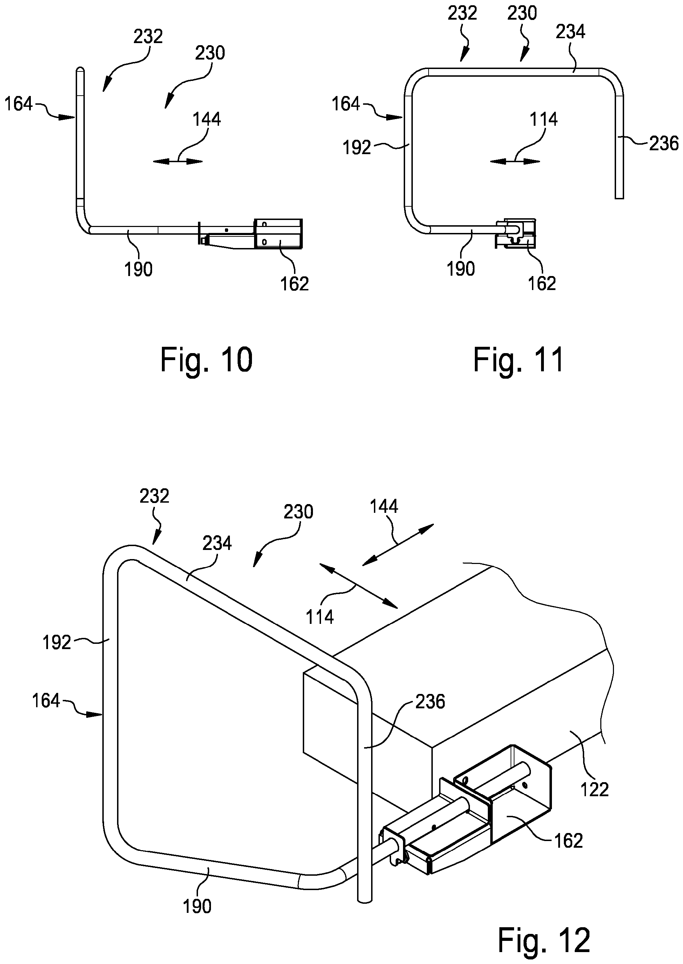

Die Figuren 7 bis 9 zeigen eine andersartige Ausführungsform einer mit dem Bezugszeichen 210 belegten Sicherungsvorrichtung, die anstelle der Sicherungsvorrichtung 160 bei der Fahrzeugwaschanlage zum Einsatz kommen könnte. In entsprechender Weise zeigen die Figuren 10 bis 12 eine weitere andersartige Ausführungsform einer Sicherungsvorrichtung 230, die anstelle der Sicherungsvorrichtung 160 bei der Fahrzeugwaschanlage 100 eingesetzt werden könnte.

Die vorstehend beschriebenen Vorteile können unter Einsatz der Sicherungsvorrichtung 210, 230 ebenfalls erzielt werden, so dass zur Vermeidung von Wiederholungen auf die voranstehenden Ausführungen verwiesen werden kann und nur die wesentlichen Unterschiede beschrieben werden.

Figur 7 zeigt die Sicherungsvorrichtung 210 in einer Seitenansicht mit Blickrichtung auf den Waschplatz 120. Figur 8 zeigt die Sicherungsvorrichtung 210 in einer Ansicht mit Blickrichtung in der Vorwärtsrichtung 154. Figur 9 zeigt die Sicherungsvorrichtung 210 in einer Draufsicht.

Bei der Sicherungsvorrichtung 210 sind zwei Kontaktabschnitte 192, 212 vorgesehen. Die Kontaktabschnitte 192, 212 sind in der Querrichtung 114 voneinander beabstandet, wobei der Kontaktabschnitt 192 wie bei der Sicherungsvorrichtung 160 innenliegend angeordnet ist und der Kontaktabschnitt 212 außenliegend. Hierbei kann der Kontaktabschnitt 212 außerhalb der Außenkontur des Waschportals 102 positioniert sein.

Dies gibt die Möglichkeit, über das Prallteil 164 speziell am Kontaktabschnitt 212 ein außerhalb des Waschportals 102 angeordnetes Hindernis zu erfassen, zum Beispiel eine sich dort unbefugt aufhaltende Person.

Vorliegend weisen die Kontaktabschnitte 192, 212 in der Längsrichtung 144 einen Versatz voneinander auf. Dieser Versatz könnte jedoch entfallen.

Zur Verbindung mit dem Halteteil 162 ist der Tragabschnitt 190 in zwei Segmente 214 unterteilt.

Figur 10 zeigt die Sicherungsvorrichtung 230 in einer Seitenansicht mit Blickrichtung auf den Waschplatz 120. Figur 11 zeigt die Sicherungsvorrichtung 230 in einer Ansicht mit Blickrichtung in der Vorwärtsrichtung 154. Figur 12 zeigt die Sicherungsvorrichtung 230 in perspektivischer und einer der Figur 3 entsprechenden Weise.

Bei der Sicherungsvorrichtung 230 bildet das Prallteil 164 in der Draufsicht in der Vorwärtsrichtung 154 einen Rahmen 232 aus. Der Rahmen 232 umfasst den Tragabschnitt 190, den Kontaktabschnitt 192 sowie ferner zwei weitere Kontaktabschnitte 234, 236. Der Kontaktabschnitt 234 grenzt an den Kontaktabschnitt 192 und erstreckt sich nach außen weg vom Waschplatz 120, wobei er vorzugsweise parallel zur Aufstellfläche 104 ausgerichtet ist. Der Kontaktabschnitt 236 grenzt an den Kontaktabschnitt 234 endseitig an und erstreckt sich von diesem nach unten in Richtung auf die Aufstellfläche 104. Der Kontaktabschnitt 236 ist beispielsweise außerhalb der Außenkontur des Waschportals 102 angeordnet, entsprechend wie der Kontaktabschnitt 212.

Über das Prallteil 164 der Sicherungsvorrichtung 230 können durch die vorstehend beschriebene Ausgestaltung somit auch Hindernisse außerhalb der Außenkontur sowie rückwärtig frontal vor dem Träger 116 erfasst werden.

Die Sicherungsvorrichtungen 160, 210 und 230 können wie vorstehend beschrieben als vormontierte Baueinheiten vorgesehen sein, was die Möglichkeit der einfachen Nachrüstung von Bestandsanlagen bietet.

### Bezugszeichenliste

- 100: Fahrzeugwaschanlage
- 102: Waschportal
- 104: Aufstellfläche
- 106: Fahrzeug
- 108, 109, 112, 113, 138: Linie
- 110: Fahrzeugtür
- 114: Querrichtung
- 116: Träger
- 118: Querträger
- 120: Waschplatz
- 122: Fahrfuß
- 124: Antriebseinrichtung
- 126: Steuereinrichtung
- 128: Vorderseite
- 130: rückwärtige Seite
- 132: Freiraum
- 134: Versatz
- 136: Reinigungsaggregat
- 140: Seitenwaschbürste
- 142, 144: Längsrichtung
- 146: Mittellängsebene
- 148: Überwachungseinrichtung
- 150: lichte Breite
- 152: Tastteil
- 154: Vorwärtsrichtung
- 155: Front
- 156: Heck
- 158: Rückwärtsrichtung
- 160, 210, 230: Sicherungsvorrichtung
- 162: Halteteil
- 164: Prallteil
- 166,232: Rahmen
- 168, 184: Hülse
- 170, 188: Vorsprung
- 172, 173, 186, 187: Anlageelement
- 174: Auflageelement
- 176: Halteabschnitt
- 178: Sensoreinrichtung
- 180: Anwesenheitssensor
- 182: Rohr
- 190: Tragabschnitt
- 192, 212, 234, 236: Kontaktabschnitt
- 194, 198: Raumrichtung
- 196: Höhenrichtung
- 200: Rückstelleinrichtung
- 202: Rückstellelement
- 204: Zugfeder
- 206: Halteglied
- 208: lichte Höhe
- 214: Segment

## Patentansprüche

1. Fahrzeugwaschanlage (100), umfassend
- ein Waschportal (102) mit zwei im Abstand zueinander angeordneten in Höhenrichtung (196) erstreckten Trägern (116) und mindestens einem diese miteinander verbindenden Querträger (118), wobei im Betrieb der Fahrzeugwaschanlage (100) ein Waschplatz (120) auf einer Aufstellfläche (104) definiert ist, wobei das Waschportal (102) zufahrtseitig eine Vorderseite (128) definiert und eine der Vorderseite (128) abgewandte rückwärtige Seite (130) aufweist,
- eine Antriebseinrichtung (124) zum Verfahren des Waschportals (102) relativ zu einem am Waschplatz (120) positionierten Fahrzeug (106) in einer Vorwärtsrichtung (154) und einer Rückwärtsrichtung (158),
- eine an der rückwärtigen Seite (130) angeordnete Sicherungsvorrichtung (160, 210, 230) zum kontaktbehafteten Erfassen eines Hindernisses, insbesondere einer Fahrzeugkomponente des Fahrzeugs (106), welche Sicherungsvorrichtung (160, 210, 230) ein Prallteil (164) aufweist, das durch Kontakt mit dem Hindernis aus einer Nichtbetätigungsstellung in mindestens eine Betätigungsstellung auslenkbar ist, und ein Halteteil (162) zum Festlegen am Waschportal (102), wobei das Prallteil (164) relativ zum Halteteil (162) zum Überführen von der Nichtbetätigungsstellung in die mindestens eine Bestätigungsstellung vorzugsweise verschwenkbar oder verkippbar ist,
- mindestens eine Sensoreinrichtung (178), die mit der Pralleinrichtung in Wirkverbindung steht und über die die Einnahme der Nichtbetätigungsstellung und/oder einer Betätigungsstellung durch die Pralleinrichtung erfassbar ist,
wobei abhängig von einem Erfassungssignal der Sensoreinrichtung (178) die Antriebseinrichtung (124) und/oder ein Reinigungsaggregat (136) der Fahrzeugwaschanlage (100) deaktivierbar ist,
wobei das Hindernis während der Bewegung des Waschportals (102) in der Rückwärtsrichtung (158) erfassbar und ein diesbezügliches Erfassungssignal bereitstellbar ist, insbesondere während eines Waschprogrammes.

2. Fahrzeugwaschanlage (100) nach Anspruch 1,
**dadurch gekennzeichnet, dass**
das Hindernis während der Bewegung des Waschportals (102) in der Vorwärtsrichtung (154) erfassbar und ein diesbezügliches Erfassungssignal bereitstellbar ist, insbesondere während eines Waschprogrammes.

3. Fahrzeugwaschanlage (100) nach Anspruch 1 oder 2,
**dadurch gekennzeichnet, dass**
die Fahrzeugwaschanlage (100) zwei Sicherungsvorrichtungen (160, 210, 230) umfasst, die an einander gegenüberliegenden Seiten des Waschplatzes (120) jeweils am Waschportal (102) festgelegt sind, wobei die Sicherungsvorrichtungen (160, 210, 230) vorzugsweise spiegelbildlich bezüglich einer Mittellängsebene (146) der Fahrzeugwaschanlage (100) ausgestaltet sind.

4. Fahrzeugwaschanlage (100) nach einem der voranstehenden Ansprüche,
**dadurch gekennzeichnet, dass**
das Waschportal (102) an einem der Träger (116) einen Fahrfuß (122) umfasst oder bildet und über diesen auf der Aufstellfläche (104) verfahrbar ist, und dass die mindestens eine Sicherungsvorrichtung (160, 210, 230) am Fahrfuß (122) festgelegt ist.

5. Fahrzeugwaschanlage (100) nach Anspruch 4,
**dadurch gekennzeichnet, dass**
der Fahrfuß (122) an der dem Waschplatz (120) abgewandten Seite relativ zu einer Außenkontur des Trägers (116) in Richtung des Waschplatzes (120) einen Versatz (134) aufweist und dass das Halteteil (162) an der dem Waschplatz (120) abgewandten Außenseite des Fahrfußes (122) im Bereich des Versatzes (134) angeordnet ist.

6. Fahrzeugwaschanlage (100) nach einem der voranstehenden Ansprüche,
**dadurch gekennzeichnet, dass**
zumindest eines der Folgenden gilt:
- das Prallteil (164) und/oder das Halteteil (162) ist zumindest abschnittsweise unterhalb eines Reinigungsaggregates (136) angeordnet und/oder verläuft unterhalb eines Reinigungsaggregates (136);
- das Prallteil (164) ist zumindest abschnittsweise seitlich neben einem Reinigungsaggregat (136) angeordnet und/oder verläuft zumindest abschnittsweise seitlich neben einem Reinigungsaggregat (136), insbesondere hinter dem Reinigungsaggregat (136).

7. Fahrzeugwaschanlage (100) nach Anspruch 6,
**dadurch gekennzeichnet, dass**
das Reinigungsaggregat (136) eine Seitenwaschbürste (140) ist, wobei das Prallteil (164) außerhalb des Wirkbereiches der Seitenwaschbürste (140) in deren angetriebenem Zustand ist, insbesondere bei Einnahme einer Endstellung der Seitenwaschbürste (140), bezogen auf die Querrichtung (114) der Fahrzeugwaschanlage (100).

8. Fahrzeugwaschanlage (100) nach einem der voranstehenden Ansprüche,
**dadurch gekennzeichnet, dass**
zumindest eines der Folgenden gilt:
- das Prallteil (164) umfasst einen Tragabschnitt (190) und ist über diesen am Halteteil (162) gehalten, der parallel zur Aufstellfläche (104) ausgerichtet ist, insbesondere horizontal;
- das Prallteil (164) umfasst einen Kontaktabschnitt (192, 212, 234, 236) zum Kontaktieren des Hindernisses, der insbesondere in einer Höhenrichtung (196) ausgerichtet ist, insbesondere vertikal.

9. Fahrzeugwaschanlage (100) nach Anspruch 8,
**dadurch gekennzeichnet, dass**
das Prallteil (164) zwei Kontaktabschnitte (192, 212, 234, 236) umfasst, die im Abstand zueinander angeordnet sind, wobei der eine Kontaktabschnitt (192, 212, 234, 236) an der dem Waschplatz (120) zugewandten Seite angeordnet ist und der andere Kontaktabschnitt (192, 212, 234, 236) insbesondere seitlich neben dem Waschportal (102) an dessen dem Waschplatz (120) abgewandten Seite.

10. Fahrzeugwaschanlage (100) nach Anspruch 8,
**dadurch gekennzeichnet, dass**
das Prallteil (164) in Ansicht längs der Vorwärts- oder der Rückwärtsrichtung (154, 158) einen Rahmen (232) umfasst oder ausbildet, zumindest mit einem Kontaktabschnitt (192, 212, 234, 236) an der dem Waschplatz (120) zugewandten Seite und einem weiteren Kontaktabschnitt (192, 212, 234, 236) im Abstand dazu sowie einem dritten Kontaktabschnitt (192, 212, 234, 236), der die vorstehenden Kontaktabschnitte miteinander verbindet und der vom Waschplatz (120) weg in Richtung einer Außenseite des Waschportals (102) verläuft.

11. Fahrzeugwaschanlage (100) nach einem der voranstehenden Ansprüche,
**dadurch gekennzeichnet, dass**
das Prallteil (164) als Rohr (182) ausgestaltet ist oder ein Rohr (182) umfasst, zumindest abschnittsweise, wobei das Rohr (182) insbesondere aus einem Metallmaterial gefertigt ist und/oder eine Ummantelung aus einem Kunststoff- oder Gummimaterial aufweist.

12. Fahrzeugwaschanlage (100) nach einem der voranstehenden Ansprüche,
**dadurch gekennzeichnet, dass**
das Waschportal (102) eine lichte Höhe (208) aufweist, die sich von der Aufstellfläche (104) bis zum mindestens einen Querträger (118) erstreckt, und dass das Prallteil (164) in Höhenrichtung (196) weniger weit reicht als ungefähr die Hälfte der lichten Höhe (208), vorzugsweise weniger als ungefähr ein Drittel der lichten Höhe (208), noch bevorzugter weniger als ungefähr ein Viertel der lichten Höhe (208), insbesondere weniger als ein Fünftel der lichten Höhe (208).

13. Fahrzeugwaschanlage (100) nach einem der voranstehenden Ansprüche,
**dadurch gekennzeichnet, dass**
die mindestens eine Sicherungsvorrichtung (160, 210, 230) mindestens ein Rückstellelement (202) umfasst oder ausbildet, entgegen dessen Wirkung das Prallteil (164) von der Nichtbetätigungsstellung in die mindestens eine Betätigungsstellung überführbar ist, vorzugsweise dass das Rückstellelement (202) ein Vorspannelement bildet, über das das Prallteil (164) in Richtung auf die Nichtbetätigungsstellung vorgespannt ist.

14. Fahrzeugwaschanlage (100) nach einem der voranstehenden Ansprüche,
**dadurch gekennzeichnet, dass**
die Sensoreinrichtung (178) ein(en) kontaktlosen Anwesenheitssensor (180) oder Näherungssensor ist oder umfasst, und/oder dass die Sensoreinrichtung (178) am Halteteil (162) gehalten ist oder dass die Sensoreinrichtung (178) am Prallteil (164) gehalten ist.

15. Fahrzeugwaschanlage (100) nach einem der voranstehenden Ansprüche,
**dadurch gekennzeichnet, dass**
zumindest eines der Folgenden gilt:
- das Prallteil (164) ist relativ zum Halteteil (162) zum Überführen von der Nichtbetätigungsstellung in die mindestens eine Bestätigungsstellung in zwei Raumrichtungen (194, 198) bewegbar, die im Winkel zueinander ausgerichtet und insbesondere senkrecht zueinander ausgerichtet sind, vorzugsweise in eine Richtung, die sich als Überlagerung der beiden genannten Raumrichtungen (194, 198) ergibt;
- das Prallteil (164) ist relativ zum Halteteil (162) zum Überführen von der Nichtbetätigungsstellung in die mindestens eine Bestätigungsstellung in Richtung auf den Waschplatz (120) und/oder in vom Waschplatz (120) weg weisender Richtung bewegbar;
- das Prallteil (164) ist relativ zum Halteteil (162) zum Überführen von der Nichtbetätigungsstellung in die mindestens eine Bestätigungsstellung weg von der Aufstellfläche (104) bewegbar und/oder in Richtung auf die Aufstellfläche (104) bewegbar.

16. Fahrzeugwaschanlage (100) nach einem der voranstehenden Ansprüche,
**dadurch gekennzeichnet, dass**
das Halteteil (162) mindestens ein Anlageelement (172, 173, 186, 187) umfasst und dass das Prallteil (164) mindestens ein korrespondierendes Anlageelement (172, 173, 186, 187) umfasst, über welche Anlageelemente (172, 173, 186, 187) das Prallteil (164) und Halteteil (162) in der Nichtbetätigungsstellung vorzugsweise flächig aneinander anliegen.

17. Fahrzeugwaschanlage (100) nach einem der voranstehenden Ansprüche,
**dadurch gekennzeichnet, dass**
die Fahrzeugwaschanlage (100) mindestens eine Überwachungseinrichtung (148) umfasst oder bildet, die an der Vorderseite (128) am Waschportal (102) angeordnet ist, wobei über die Überwachungseinrichtung (148) eine Fehlpositionierung und/oder eine Überbreite des Fahrzeugs (106) am Waschplatz (120) insbesondere kontaktbehaftet erfassbar ist.

18. Fahrzeugwaschanlage (100) nach Anspruch 17,
**dadurch gekennzeichnet, dass**
über die Überwachungseinrichtung (148) eine lichte Breite (150) am Waschplatz (120) bestimmt ist, bezogen auf eine Querrichtung (114) der Fahrzeugwaschanlage (100), wobei ein innerhalb der lichten Breite (150) positioniertes Fahrzeug (106) als korrekt positioniert und/oder als nicht überbreit angesehen wird, und wobei das Prallteil (164) in der Querrichtung (114) außerhalb der lichten Breite (150) oder maximal an einer Grenze der lichten Breite (150) angeordnet ist.

19. Fahrzeugwaschanlage (100) nach einem der voranstehenden Ansprüche,
**dadurch gekennzeichnet, dass**
die Fahrzeugwaschanlage (100) eine Steuereinrichtung (126) umfasst, die einen Signaleingang für ein Signal der Überwachungseinrichtung (148) zur Kopplung mit dieser aufweist, wobei ein Sensor der mindestens einen Sensoreinrichtung (178) über den Signaleingang mit der Steuereinrichtung (126) gekoppelt ist, wobei bei Anliegen eines Signals am Signaleingang die Antriebseinrichtung (124) und/oder ein Reinigungsaggregat (136) der Fahrzeugwaschanlage (100) deaktivierbar ist.

20. Verfahren zum Betreiben einer Fahrzeugwaschanlage (100), insbesondere nach einem der voranstehenden Ansprüche, umfassend
- Bewegen eines Waschportals (102) in einer Rückwärtsrichtung (158);
- Erfassen eines Kontaktes eines Prallteils (164) einer Sicherungsvorrichtung (160, 210, 230) während der Rückwärtsbewegung mit einem Hindernis, insbesondere einer Fahrzeugkomponente während der Bewegung;
- Deaktivieren einer Antriebseinrichtung (124) für das Waschportal (102) und/oder eines Reinigungsaggregates (136) der Fahrzeugwaschanlage (100) abhängig von einem diesbezüglichen Erfassungssignal.
